# EUROPÄISCHE PATENTANMELDUNG

(11) **EP 1 995 031 A1**
(43) Veröffentlichungstag der Anmeldung: **26.11.2008**
(21) Anmeldenummer: 08102955.5
(22) Anmeldetag: 27.03.2008
(51) Int. Cl.: B29C 33/60, C08K 5/098

(54) **Wässrige Trennmittel und ihre Verwendung bei der Herstellung von Polyurethan-Formkörpern**

(30) Priorität: 25.05.2007 DE 102007024493
(71) Anmelder: Evonik Goldschmidt GmbH, 45127 Essen (DE)
(72) Erfinder: Henning, Torsten, Dr., 63457, Hanau (DE); Kindling, Anja, 52372, Kreuzau (DE); Althoff, Ralf, 45721, Haltern am See (DE)

(57) **Zusammenfassung**

Gegenstand der Erfindung sind wässrige Trennmittel-Dispersionen für die Herstellung von Polyurethan-Formkörpern enthaltend im Wesentlichen
A) mindestens ein trennaktives Mittel aus der Gruppe der Seifen, Öle, Wachse und Silicone und
B) Emulgatoren und
C) gegebenenfalls Schaumstabilisatoren und
D) gegebenenfalls Viskositätsmodifizierer und
E) gegebenenfalls Hilfs- und Zusatzstoffe und
F) mindestens eines Alkali- oder Erdalkalicarboxylats und
G) Wasser.

## Beschreibung

Die Erfindung betrifft wässrige Trennmittel und ihre Verwendung bei der Herstellung von Polyurethan-Formkörpern.

Es ist bekannt, dass die zur Herstellung von Formkörpern verwendeten Polyurethansysteme gegenüber den verwendeten Formwerkstoffen, bevorzugt thermisch stark leitfähige Werkstoffe wie Metalle, eine starke Adhäsion zeigen. Daher benötigt man bei der Entformung der Polyurethan-Formkörper Trennmittel, die auf die mit Polyurethanen und/oder der Polyurethanreaktionsmischung in Berührung kommenden Formwandungen aufgebracht werden.

Solche Trennmittel bestehen aus Dispersionen oder Emulsionen von Wachsen, Seifen, Ölen und/oder Siliconen in Lösungsmitteln wie Kohlenwasserstoffe oder Wasser.

Nach Aufbringen des Trennmittels auf die Form verdampft das Lösungsmittel und die nichtflüchtigen, trennaktiven Substanzen bilden einen dünnen Trennfilm, der gewährleisten soll, dass der Polyurethan-Formkörper nach der Herstellung leicht aus der Form entnommen werden kann.

Um die Umweltbelastung mit organischem Material zu reduzieren, besteht ein hohes Interesse an Trennmitteln auf wässriger Basis, die frei von flüchtigem, organischem Material sind. Die im Markt befindlichen wässrigen Trennmittel zeigen jedoch gegenüber klassischen, organischen Lösungsmitteln enthaltenden Trennmitteln den Nachteil, dass nach dem Verdampfen eines Großteils des Wassers immer ein dünner Wasserfilm in der Form zurückbleibt, der sich bei den üblichen Formtemperaturen von 45 °C bis 80 °C, bevorzugt 50 °C bis 75 °C, nicht verflüchtigt und mit den Isocyanatverbindungen des Polyurethansystems Reaktionen eingeht, die zu sehr harten Polyharnstoffverbindungen führen. Dadurch werden die Formoberflächen gestört. Sie erhalten einen so genannten Aufbau, von dem sie aufwändig gereinigt werden müssen.

Neben der eigentlich benötigten Trennwirkung übernimmt das Trennmittel noch weitere Funktionen. So beeinflusst es auch sehr stark die Oberfläche des Polyurethan-Formkörpers, die feinporig bzw. glatt und gleichmäßig sein soll, unter anderem auch, um eine gute, d.h. leichte, Beziehbarkeit der fertigen Formteile mit Stoffen oder Leder zu gewährleisten.

Im Zuge immer stärkerer Optimierung der Produktionsgeschwindigkeiten, insbesondere in der Automobilzuliefererindustrie, ist gerade die oben beschriebene Eigenschaft der Beziehbarkeit des Polyurethan-Formkörpers zu einem wichtigen Qualitätsmerkmal geworden.

Eine Möglichkeit, die Oberflächenqualität der Polyurethanformschaumteile zu verbessern, ist der Einsatz von Stoffen, die die Polyol-Isocyanat-Reaktion katalysieren und dadurch beschleunigen. Die im Markt befindlichen wässrigen Trennmittel für Polyurethanformteile enthalten daher üblicherweise so genannte Zinnbeschleuniger, also Katalysatoren auf der Basis von organischen Zinnverbindungen. Neben der Verbesserung der Oberflächenqualität wirken diese Zinnbeschleuniger auch trennunterstützend, da sie die Polyol-Isocyanat-Reaktion an der Grenzfläche zwischen Schaum und Trennfilm beschleunigen.

Dadurch wird auch das oben beschriebene Problem des Formenaufbaus gemildert, da durch die Trennunterstützung des Zinnbeschleunigers weniger Trennmittel auf die Form aufgebracht werden muss, um eine gute Trennwirkung zu erreichen.

Besonders geeignet sind Di-n-butylzinndicarboxylate, wie in EP 1 082 202 beschrieben. Hauptsächlich wird Dibutylzinndilaurat (DBTL) eingesetzt, wie zum Beispiel in DE 35 41 513 oder EP 0 164 501 beschrieben.

Bekanntlich ist DBTL mit R 50/53 (umweltgefährlich, sehr giftig für Wasserorganismen) gekennzeichnet und birgt bei Lagerung und Transport von Trennmitteln, die DBTL enthalten, Risiken für die Umwelt in sich.

Daher fordern bereits jetzt viele Polyurethanformschaumkunden, beispielsweise im Schuhsohlen- oder Matratzenbereich, dass das verwendete Trennmittel frei ist von Zinnverbindungen.

Außerdem wird seitens des ECB (European Chemical Bureau) eine Gruppeneinstufung vorgenommen werden, die organische Zinnverbindungen als reproduktionstoxisch mit den R-Sätzen R60-R61 kennzeichnet. Einige Di-n-butylzinndicarboxylate, darunter DBTL, werden davon betroffen sein. Trennmittel, die solche Komponenten enthalten, sind dann praktisch nicht mehr einsetzbar.

Aufgabe der vorliegenden Erfindung war es daher, wässrige Formtrennmittel zu finden, die frei sind von zinnorganischen Verbindungen, die aber trotzdem eine gute Trennwirkung zeigen, keinen Aufbau an den Formwänden bewirken und die Oberflächen der Polyurethan-Formkörper günstig beeinflussen, also feinporig, gleichmäßig und glatt hinterlassen.

Überraschenderweise wurde gefunden, dass durch die Verwendung von Alkali- oder Erdalkalisalzen organischer Säuren als Katalysatoren in Mengen von 0,01 bis 10 Gew.-%, bevorzugt 0,05 bis 5 Gew.-%, insbesondere 0,1 bis 3 Gew.-%, in wässrigen Dispersionen enthaltend klassische, trennaktive Substanzen wie Wachse, Seifen, Öle und/oder Silicone in Mengen von 0,5 bis 40 Gew.-%, bevorzugt 3 bis 20 Gew.-%, diese Aufgabe erfüllen.

Ein Gegenstand der Erfindung sind daher wässrige Trennmittel-Dispersionen für die Herstellung von Polyurethan-Formkörpern enthaltend im Wesentlichen (Summe der Anteile der Komponenten A, B, C, D, E, F und G entspricht zumindest 50 Gew.-%, vorzugsweise zumindest 80 Gew.-% und bevorzugt 100 Gew.-% der Dispersion):
A) mindestens ein trennaktives Mittel aus der Gruppe der Seifen, Öle, Wachse und Silicone und
B) Emulgatoren und
C) gegebenenfalls Schaumstabilisatoren und
D) gegebenenfalls Viskositätsmodifizierer und
E) gegebenenfalls Hilfs- und Zusatzstoffe und
F) 0,01 bis 10 Gew.-%, vorzugsweise 0,05 bis 5 Gew.-%, mindestens eines Alkali- oder Erdalkalicarboxylats und
G) Wasser.

Die erfindungsgemäßen wässrigen Trennmittel-Dispersionen werden bevorzugt als externe Trennmittel eingesetzt und enthalten deshalb keine Edukte zur Herstellung von Polyurethanen.

Bevorzugte Dispersionen enthalten:
A) mindestens ein trennaktives Mittel aus der Gruppe der Seifen, Öle, Wachse und Silicone und
B) Emulgatoren und
C) mindestens einen Schaumstabilisator und/oder
D) mindestens einen Viskositätsmodifizierer und/oder
E) mindestens einen Hilfs- und/oder Zusatzstoff und
F) 0,01 bis 10 Gew.-%, vorzugsweise 0,05 bis 5 Gew.-%, mindestens eines Alkali- oder Erdalkalicarboxylats und
G) Wasser.

Besonders bevorzugt bestehen die Dispersionen aus:
A) 0,5 bis 40 Gew.-% mindestens eines trennaktiven Mittels ausgesucht aus der Gruppe der Seifen, Öle, Wachse und Silicone und
B) 0,1 bis 10 Gew.-% Emulgatoren,
C) 0 bis 5 Gew.-%, vorzugsweise 0,1 bis 5 Gew.-% Schaumstabilisatoren,
D) 0 bis 5 Gew.-%, vorzugsweise 0,1 bis 5 Gew.-% Viskositätsmodifizierer,
E) 0 bis 2 Gew.-%, vorzugsweise 0,1 bis 2 Gew.-% übliche Hilfs- und/oder Zusatzstoffe, insbesondere Konservierungsmittel, Bakterizide, Fungizide und/oder vorzugsweise Antioxidantien,
F) 0,05 bis 10 Gew.-%, vorzugsweise 0,1 bis 5 Gew.-%, mindestens eines Alkali- oder Erdalkalicarboxylats und
G) Wasser.

Bevorzugt enthalten erfindungsgemäße Dispersionen als Komponente F Alkali- oder Erdalkalisalze organischer Säuren R-COOH, worin R vorzugsweise ein gegebenenfalls verzweigter, gegebenenfalls Mehrfachbindungen enthaltender C₂ bis C₂₂ Kohlenwasserstoffrest, bevorzugt ein Alkylrest, Alkenylrest und/oder Arylrest, ist.

Zur Herstellung geeigneter Salze können die auf diesem Gebiet bekannten und üblichen einbasischen Carbonsäuren eingesetzt werden. Ebenso können die erfindungsgemäß in der Dispersion enthaltenen Salze auf natürlichen pflanzlichen oder tierischen Fetten und Ölen, insbesondere solchen mit 2 bis 22 Kohlenstoffatomen, vorzugsweise mit ≥ 2 bis 18 C-Atomen, insbesondere mit 2 bis 12 Kohlenstoffatomen, basieren. Besonders bevorzugt enthalten die erfindungsgemäßen Dispersionen Salze von einer oder mehrerer Säuren, ausgewählt aus Essigsäure, Propionsäure, n-Buttersäure, iso-Buttersäure, Heptansäure, Capronsäure, Caprylsäure, 2-Ethyl-hexansäure, Caprinsäure, Neodecansäure, Laurinsäure, Myristinsäure, Palmitinsäure, Palmitoleinsäure, Isostearinsäure, Stearinsäure, Ölsäure, Linolsäure, Petrolesinsäure, Elaidinsäure, Arachinsäure, Behensäure, Eurucasäure, Gadoleinsäure, Rapsölfettsäure, Sojaölfettsäure, Sonnenblumenölfettsäure oder Tallölfettsäure, sowie Salze von bei der Druckspaltung anfallenden technischen Mischungen. Geeignet sind prinzipiell alle Fettsäuresalze mit ähnlicher Kettenverteilung.

Der Gehalt an ungesättigten Anteilen im Fettsäurerest kann - soweit dies erforderlich ist - durch die bekannten katalytischen Hydrierverfahren auf eine gewünschte Jodzahl eingestellt oder durch Abmischung von vollhydrierten mit nichthydrierten Fettkomponenten erzielt werden.

Die Jodzahl, als Maßzahl für den durchschnittlichen Sättigungsgrad einer Fettsäure, ist die Jodmenge, welche von 100 g der Verbindung zur Absättigung der Doppelbindungen aufgenommen wird.
Die erfindungsgemäßen Dispersionen enthalten als Komponente F vorzugsweise Salze, die als Alkali- oder Erdalkalikation vorzugsweise Lithium-, Natrium- und/oder Kaliumkationen, besonders bevorzugt ausschließlich Kaliumkation aufweisen. Besonders bevorzugt enthält die erfindungsgemäße Dispersion als Komponente F Kaliumacetat oder Kaliumoctoat.

Die Alkali- oder Erdalkalicarboxylate sind aus den organischen Säuren R-COOH nach den literaturbekannten Verfahren herstellbar oder als handelsübliche Produkte unter den jeweiligen Markennamen erhältlich, wie Kaliumacetat als reinst (Fa. Merck KGaA), PC CAT® TKA (Nitroil Europe) und Polycat® 46 (Air Products) oder Kaliumoctoat als Tegokat® K15 (Goldschmidt TIB GmbH), Fomrez® EC-686 (Witco Chemicals Corporation), Dabco® K-15 (Air Products) und PC CAT® TKO (Nitroil Europe) oder Mischungen aus Kaliumacetat und Kaliumoctoat wie PC Cat® K1 (Nitroil Europe) .

Diese Salze haben den Vorteil, dass sie nicht als giftig und nicht als umweltgefährlich eingestuft sind. Diese Salze haben weiterhin den Vorteil, dass sie einmal die Reaktion der Polyole mit den Isocyanaten an den Grenzflächen der Reaktionsmischung/Formoberfläche katalysieren und weiterhin die Oberfächenbeschaffenheit des Schaums in Richtung auf die erforderliche Zelligkeit und Struktur beeinflussen: Diese soll innerhalb einer gewissen Zellgröße liegen (feinzellig, aber kein Mikroschaum oder Grobschaum) und leicht offenporig sein (nicht geschlossen oder überwiegend offen). Diese Kriterien sind weitgehend praxisbezogen, d.h. durch einige orientierende Versuche optimierbar und erleichtern die Beziehbarkeit des Formkörpers mit beispielsweise textilen Bezügen.

Ein weiterer Gegenstand der Erfindung ist die Verwendung der erfindungsgemäßen Dispersionen als externes Trennmittel bei der Herstellung von Polyurethan-Formkörpern.

Weitere Gegenstände der Erfindung sind durch die Ansprüche gekennzeichnet.

Als klassische, trennaktive Substanzen (Komponente A) können in der erfindungsgemäßen Dispersion beispielsweise verwendet werden:
Wachse, d.h. flüssige, feste, natürliche oder synthetische Wachse, auch oxidiert und/oder teilverseift; Ester von Carbonsäuren mit Alkoholen oder Fettalkoholen, Öle, wie bei Raumtemperatur flüssige oder zähfließende Kohlenwasserstoffe, gegebenenfalls aber nicht bevorzugt, unter Mitverwendung ungesättigter oligomerer und/oder polymerer Kohlenwasserstoffe; Silicone, wie Polydimethylsiloxane, gegebenenfalls substituiert mit aliphatischen oder aromatischen Kohlenwasserstoffresten.

Typische, trennwirksame Wachse sind beispielsweise aufgeführt in den Firmenschriften "Waxes by Clariant, production, characteristics and applications" Clariant Mai 2003 und "Formtrennmittel mit Vestowax®" von Degussa.

Als übliche Emulgatoren können ein oder mehrere Verbindungen ausgesucht aus den Gruppen:
I) anionische Emulgatoren wie Alkylethercarboxylate, Alkylsulfate, Fettalkoholethoxylatethersulfate, alpha-Olefinsulfonate, Alkylphosphate, Alkylpolyetherphosphate, Alkylsulfosuccinate,
II) nichtionische Emulgatoren wie ethoxylierte Fettalkohole, ethoxylierte Oxoalkohole und andere Alkoholether, Fettamine wie Dimethylalkylamine, Fettsäurealkanolamide, Fettsäureester mit Alkoholen, darunter auch Glycerinester oder Polyglycerinester oder Sorbitolester,
III) kationische Emulgatoren wie sauer gestellte Alkyldimethylamine, quaternäre Stickstoffverbindungen,
IV) zwitterionische Tenside, enthalten sein. Vorzugsweise sind die Emulgatoren in Mengen von 0,1 bis 10 Gew.-%, bevorzugt 0,5 bis 6 Gew.-% in der Dispersion als Komponente B enthalten.

Als Komponente C können eine oder mehrere der im Stand der Technik als Schaumstabilisatoren bekannten Verbindungen in der erfindungsgemäßen Dispersion enthalten sein. Diese können beispielsweise ausgesucht sein aus der Gruppe der Polyurethanschaumstabilisatoren, wie zum Beispiel Polysiloxan-Polyether-Copolymerisate.

Als Komponente D können eine oder mehrere der im Stand der Technik als Viskositätsmodifizierer bekannten Verbindungen in der erfindungsgemäßen Dispersion enthalten sein. Übliche Viskositätsmodifizierer sind beispielsweise typische Verdicker, wie als Carbomere bezeichnete Polyacrylsäurederivate oder andere Polyelektrolytverdicker, wie wasserlösliche Cellulosederivate oder auch Xanthan Gum. Als Viskositätsmodifizierer in wässrigen Formulierungen können auch aliphatische Kohlenwasserstoffe gesehen werden, also Benzinfraktionen, die die eingesetzten Wachse aufquellen und so einen verdickenden Effekt zeigen.

Als übliche Hilfs- und Zusatzstoffe können eine oder mehrere der im Stand der Technik bekannten Verbindungen in der erfindungsgemäßen Dispersion als Komponente E enthalten sein. Bevorzugte Hilfs- und/oder Zusatzstoffe sind z. B. übliche Konservierungsmittel wie Bakterizide oder Fungizide z. B. Euxyl 100, Lieferant Schülke & Mayr, Mergal K 12, Lieferant Troy, oder Antioxidantien z. B. Irganox 1520 L, Hersteller Ciba.

Die erfindungsgemäßen Dispersionen können z. B. nach den im Stand der Technik bekannten Verfahren hergestellt werden. Bevorzugt werden die erfindungsgemäßen Dispersionen in der Weise hergestellt, dass der Emulgator mit trennaktiven Substanzen in geschmolzener Form (unterhalb der Siedetemperatur des Wassers) vorgelegt, scherkraftreich ein Teil des Wassers eingetragen wird, dann das restliche Wasser, enthaltend die weiteren Komponenten, scherkraftarm zugegeben wird.

Die Verwendung der erfindungsgemäßen Trennmittel-Dispersion kann in der üblichen Weise erfolgen. Klassischerweise wird bei der Herstellung von Polyurethan-Formkörpern die Form auf die gewünschte Formtemperatur von 45° C bis 80° C, bevorzugt 50° C bis 75°C, gebracht, mit Trennmittel eingesprüht, eine gewisse Zeit - je nach Wasseranteil ca. 1 bis 10 Minuten - gewartet, bis die größte Menge Wasser verdampft ist und dann das reaktive Polyurethansystem aus Polyolen, Polyisocyanaten und gegebenenfalls weiteren Additiven wie Katalysatoren, Schaumstabilisatoren und Treibmitteln, eingepumpt. Die Form wird geschlossen und nach der Aushärtezeit geöffnet und das Formteil entformt.

Beispiele:
Die vorliegende Erfindung wird durch die nachfolgenden Beispiele näher erläutert, ohne sie darauf einzuschränken.

Liste der eingesetzten Substanzen:
- DC® 190 = Polyethersiloxan, Hersteller: Air Products,
- Polyöl® 130 = Polybutadien mit mittlerer Molmasse von ca. 3.000 und Iodzahl von ca. 450 g Jod/100 g, Hersteller: Degussa,
- Fettamin = R-NH₂ mit R = C₁₂₋₂₂, gegebenenfalls verzweigter Alkylrest,
- Mikrowachs = handelsübliche Wachse mit einer Erstarrungstemperatur von 50° C bis 90° C,
- Polyethylenwachs = handelsübliche Wachse mit einer Erstarrungstemperatur von 50° C bis 90° C,
- Tegokat® K15 = Kaliumoctoat, Hersteller: Goldschmidt TIB GmbH,
- Kaliumacetat reinst, Hersteller: Merck KGaA
- Kosmos® 19 = Dibutylzinndilaurat (DBTL), Hersteller: Goldschmidt GmbH,
- Desmophen® PU 50REII = Polyetherpolyol, Hersteller: Bayer,
- Tegoamin® TA 33, Hersteller: Goldschmidt GmbH,
- Tegostab® B 4113 = organomodifiziertes Siloxan, Hersteller: Goldschmidt GmbH,
- Suprasec® X 2412 = Diphenylmethan-4,4'-diisocyanat, Hersteller: Huntsman.

### Beispiel 1:

Trennmittel 1, ohne Katalysator:
1,2 Gew.-% Polyethylenwachs (Erstarrungspunkt 60° C), 6,4 Gew.-% Mikrowachs (Erstarrungspunkt 70° C), 6,0 Gew.-% Polyöl® 130, 1,4 Gew.-% Fettamin, 0,1 Gew.-% Essigsäure (60 % in Wasser), 1,5 Gew.-% DC® 190, 83,4 Gew.-% Wasser.

### Beispiel 2:

Trennmittel 2, mit DBTL:
1,2 Gew.-% Polyethylenwachs (Erstarrungspunkt 60° C), 6,4 Gew.-% Mikrowachs (Erstarrungspunkt 70° C), 6,0 Gew.-% Polyöl® 130, 1,4 Gew.-% Fettamin, 0,1 Gew.-% Essigsäure (60 % in Wasser), 1,5 Gew.-% DC® 190, 0,4 Gew.-% Kosmos® 19, 83,0 Gew.-% Wasser.

### Beispiel 3:

Trennmittel 3, mit Kaliumoctoat:
1,2 Gew.-% Polyethylenwachs (Erstarrungspunkt 60° C), 6,4 Gew.-% Mikrowachs (Erstarrungspunkt 70° C), 6,0 Gew.-% Polyöl® 130, 1,4 Gew.-% Fettamin, 0,1 Gew.-% Essigsäure (60 % in Wasser), 1,5 Gew.-% DC® 190, 0,3 Gew.-% Tegokat® K15, 83,1 Gew.-% Wasser.

### Beispiel 4:

Trennmittel 4, mit Kaliumacetat:
1,2 Gew.-% Polyethylenwachs (Erstarrungspunkt 60° C), 6,4 Gew.-% Mikrowachs (Erstarrungspunkt 70° C), 6,0 Gew.-% Polyöl® 130, 1,4 Gew.-% Fettamin, 0,1 Gew.-% Essigsäure (60 % in Wasser), 1,5 Gew.-% DC® 190, 0,3 Gew.-% Kaliumacetat reinst, 83,1 Gew.-% Wasser.

Trennmittelversuche:
Die Trennmittel wurden mittels einer 0,5 mm Düse in praxisnahen Mengen von 20 g/m² auf Testmetallplatten aufgesprüht und ein schäumbares Polyurethansystem bestehend aus 100 Teilen Desmophen® PU 50REII, 3,5 Teilen Wasser, 0,5 Teilen Tegoamin® TA 33, 1,5 Teilen Diethanolamin, 1 Teil Tegostab® B4113, 78 Teilen Suprasec® X 2412 auf diese Platten in einer Kastenform bei 55° C aufgeschäumt.

Nach dem Aushärten (10 Minuten) wurden die Metallplatten unter Verwendung eines Federkraftmessers vom Schaum abgezogen, um ein Maß für die Trennwirkung zu messen.

Bewertung der Trennversuche:

| Trennmittel | Kraft zum Abziehen der Metallplatte vom Schaum [kg] | Beurteilung der Schaumoberfläche |
|---|---|---|
| 1 | 1,1 | Hautbildung, schmierig, schlecht beziehbar, da zu hohe Reibungskräfte an der geschlossenen und damit größeren Oberfläche |
| 2 | 0,8 | leicht offenporig, trocken, gut beziehbar |
| 3 | 0,8 | leicht offenporig, trocken, gut beziehbar |
| 4 | 0,9 | leicht offenporig, trocken, gut beziehbar |

Wie aus obiger Tabelle ersichtlich, erfüllen die erfindungsgemäß verwendeten ungiftigen Kaliumsalze die Forderungen der Praxis hinsichtlich Beziehbarkeit und Poreneigenschaften. Sie weisen deutliche technische Vorteile gegenüber dem Blindwert ohne Katalysator (Trennmittel 1) und sind technisch gleichwirkend mit den giftigen Zinnverbindungen (Trennmittel 2).

## Patentansprüche

1. Wässrige Trennmittel-Dispersionen für die Herstellung von Polyurethan-Formkörpern enthaltend im Wesentlichen
A) mindestens ein trennaktives Mittel aus der Gruppe der Seifen, Öle, Wachse und Silicone und
B) Emulgatoren und
C) gegebenenfalls Schaumstabilisatoren und
D) gegebenenfalls Viskositätsmodifizierer und
E) gegebenenfalls Hilfs- und Zusatzstoffe und
F) 0,05 bis 10 Gew.-% mindestens eines Alkali- oder Erdalkalicarboxylats und
G) Wasser.

2. Dispersionen gemäß Anspruch 1 enthaltend im Wesentlichen
A) 0,5 bis 40 Gew.-% mindestens eines trennaktiven Mittels ausgesucht aus der Gruppe der Seifen, Öle, Wachse und Silicone und
B) 0,1 bis 10 Gew.-% Emulgatoren,
C) 0 bis 5 Gew.-% Schaumstabilisatoren,
D) 0 bis 5 Gew.-% Viskositätsmodifizierer,
E) 0 bis 2 Gew.-% übliche Konservierungsmittel, Bakterizide, Fungizide und Antioxidantien,
F) 0,05 bis 10 Gew.-% mindestens eines Alkali- oder Erdalkalicarboxylats und
G) Wasser.

3. Dispersionen gemäß Anspruch 1 oder 2, **dadurch gekennzeichnet, dass** als Komponente F) mindestens ein Kalium-Salz organischer Säuren R-COOH eingesetzt wird, worin R ein gegebenenfalls verzweigter, gegebenenfalls Mehrfachbindungen enthaltender C₂ bis C₂₂ Kohlenwasserstoffrest ist.

4. Dispersionen gemäß einem der Ansprüche 1 bis 3, **dadurch gekennzeichnet, dass** als Komponente F Kaliumoctoat oder Kaliumacetat eingesetzt wird.

5. Verwendung der Trennmittel-Dispersionen gemäß den Ansprüchen 1 bis 4 zur Herstellung von Polyurethan-Formkörpern.

6. Verwendung der Trennmittel-Dispersionen gemäß den Ansprüchen 1 bis 4 zur Verbesserung der Beziehbarkeit von damit hergestellten Polyurethan-Formkörpern.
